# EUROPEAN PATENT APPLICATION

(11) **EP 3 575 366 A1**
(43) Date of publication of application: **04.12.2019**
(21) Application number: 18741884.3
(22) Date of filing: 17.01.2018
(51) Int. Cl.: C08L 101/00, C08K 3/22, C08L 29/04, C08L 63/00, C08L 75/04, C08L 79/08, D01F 9/08

(54) **MATERIAL HAVING HIGH THERMAL CONDUCTIVITY AND METHOD FOR PRODUCING SAME**

(30) Priority: 19.01.2017 JP 2017007138; 27.10.2017 JP 2017207728
(71) Applicant: University of Fukui, Fukui-shi, Fukui 910-8507 (JP); Nissan Chemical Corporation, Tokyo 103-6119 (JP)
(72) Inventor: NAKANE Koji, Fukui-shi Fukui 910-8507 (JP); GAO Shuya, Fukui-shi Fukui 910-8507 (JP); OGOSHI Akiyoshi, Funabashi-shi Chiba 274-0052 (JP); SUWA Takeshi, Funabashi-shi Chiba 274-0052 (JP); ISAJI Tadayuki, Funabashi-shi Chiba 274-0052 (JP); OZAWA Masaaki, Funabashi-shi Chiba 274-0052 (JP)
(74) Representative: Mewburn Ellis LLP
(86) International application number: PCT/JP2018/001152
(87) International publication number: WO 2018/135517

(57) **Abstract**

Provided are: a material having high thermal conductivity that includes an alumina fiber sheet and a resin, wherein the material having high thermal conductivity includes 20-90% by mass of the alumina fiber sheet; and a method for producing a material having high thermal conductivity, the method including (1) a step for preparing a fiber sheet that includes an alumina source by electrostatic spinning or dry spinning in which a dispersion including an alumina source and a water-soluble polymer is used as a spinning material, (2) a step for firing the fiber sheet including an alumina source to prepare an alumina fiber sheet, and (3) a step for impregnating the alumina fiber sheet with a resin solution having a resin concentration of 10% by weight or less.

## Description

### TECHNICAL FIELD

The present invention relates to a material having high thermal conductivity and a method for producing the same.

### BACKGROUND ART

In recent years, miniaturization and weight saving of electronic devices have been advanced in the motor vehicle and electrical machinery industries. On the other hand, thermal runaway, thermal fatigue and the like due to an increase in heating value have become a problem. Metals typified by aluminum and the like have high thermal conductivity but have problems from the viewpoint of weight and electrical insulation property. A resin material having high thermal conductivity is superior to a metal material having high thermal conductivity from the viewpoint of weight saving and electrical insulation property and is thus expected to replace the metal material. Hence, it has been widely investigated to combine a filler having high thermal conductivity and electrical insulation property with a resin.

The heat generation in portable electronic devices may cause burns to the user, and thus an anisotropic thermally conductive material which can conduct the heat to a portion which is not touched by the user is demanded. The waste heat from the engine generated when a motor vehicle is driven is utilized for heating, dehumidification, snow removal and the like. In a next-generation vehicle typified by a hybrid vehicle, the engine operation time is short from the viewpoint of fuel saving and the waste heat to be generated is also significantly diminished. In order to utilize waste heat more efficiently than ever, an anisotropic thermally conductive material which efficiently conducts heat to the desired portion is demanded.

In order to maintain the advantages of light weight and processability of resin, it is important to add a small amount of thermally conductive filler and to efficiently form the thermally conductive path. From such a viewpoint, particulate, plate-like or fibrous ones have been investigated as the shape of thermally conductive filler. For example, Patent Document 1 discloses a thermoplastic resin composition in which three alumina particles having high thermal conductivity and different particle diameters are combined. In addition, Patent Document 2 discloses a thermoplastic resin composition in which an inorganic fiber having high thermal conductivity and an inorganic powder having high thermal conductivity are combined.

The present inventors have reported a polyurethane sheet containing an alumina fiber obtained by performing electrostatic spinning of a spinning solution prepared by dispersing boehmite particles in an aqueous solution of polyvinyl alcohol and removing the polyvinyl alcohol by firing as a fibrous heat conductive filler (Non-Patent Document 1). However, the content of alumina in the polyurethane sheet is low, and it is thus difficult to increase the content of alumina by the conventional production method and to attain sufficient thermal conductivity.

### PRIOR ART DOCUMENTS

### PATENT DOCUMENTS

Patent Document 1: JP-A H05-132576
Patent Document 2: JP-A H08-283456

### NON-PATENT DOCUMENTS

Non-Patent Document 1: Koji Nakane et al., "Thermal Conductivity of Polyurethane Sheets containing Alumina Nanofibers", SENI GAKKAISHI Vol. 71, No. 1 (2015)

### SUMMARY OF INVENTION

### TECHNICAL PROBLEM

The present invention has been made in view of such circumstances, and an object thereof is to provide a material having high thermal conductivity, which contains an alumina fiber sheet having high thermal conductivity in a proper amount and a resin, and a method for producing the same.

### SOLUTION TO PROBLEM

The present inventors have conducted intensive investigations to achieve the above object and, as a result, found out that a composite containing an alumina fiber sheet having high thermal conductivity in a proper amount and a resin can be produced by impregnating an alumina fiber sheet having high thermal conductivity with a resin solution having a predetermined concentration or less and the composite has sufficient thermal conductivity and is suitable as a material having high thermal conductivity, and thus completed the present invention.

In other words, the present invention provides the following material having high thermal conductivity and a method for producing the same.
1. A material having high thermal conductivity, the material including an alumina fiber sheet and a resin, wherein the alumina fiber sheet is contained in the material having high thermal conductivity at 20% to 90% by weight.
2. The material having high thermal conductivity according to 1, wherein the alumina fiber sheet is contained in the material having high thermal conductivity at 30% to 80% by weight.
3. The material having high thermal conductivity according to 1 or 2, wherein the alumina fiber is oriented in a certain direction.
4. The material having high thermal conductivity according to any one of 1 to 3, wherein the alumina fiber contains α-alumina.
5. The material having high thermal conductivity according to 4, wherein the α-alumina is contained in the alumina fiber at 50% by weight or more.
6. The material having high thermal conductivity according to any one of 1 to 5, wherein an average fiber diameter of the alumina fibers is 50 to 2,000 nm.
7. The material having high thermal conductivity according to 6, wherein an average fiber diameter of the alumina fibers is 100 to 1,000 nm.
8. The material having high thermal conductivity according to any one of 1 to 7, wherein the resin is at least one kind selected from the group consisting of polyvinyl alcohol, a polyurethane resin, an epoxy resin, a polyimide resin, and a silicone resin.
9. The material having high thermal conductivity according to any one of 1 to 8, wherein a thermal conductivity of the material having high thermal conductivity is 5 W/mK or more.
10. The material having high thermal conductivity according to any one of 1 to 9, wherein a thermal conductivity of the material having high thermal conductivity is anisotropic and a ratio of a thermal conductivity in a direction parallel to an alumina fiber to a thermal conductivity in a direction orthogonal to the alumina fiber is 1.4 or more.
11. The material having high thermal conductivity according to any one of 1 to 10, wherein the material having high thermal conductivity is electrically insulating.
12. A material having high thermal conductivity, the material including an alumina fiber sheet and a resin, wherein
   (1) a thermal conductivity of the material having high thermal conductivity is 5 W/mK or more,
   (2) the alumina fiber is oriented in a certain direction, and
   (3) a thermal conductivity of the material having high thermal conductivity is anisotropic and a ratio of a thermal conductivity in a direction parallel to an alumina fiber to a thermal conductivity in a direction orthogonal to the alumina fiber is 1.4 or more.
13. The material having high thermal conductivity according to 12, wherein the material having high thermal conductivity is electrically insulating.
14. A method for producing a material having high thermal conductivity, the method including the steps of:
   (1) fabricating a fiber sheet containing an alumina source using a dispersion containing the alumina source and a water-soluble polymer as a spinning material by an electrostatic spinning method or a dry spinning method;
   (2) firing the fiber sheet containing an alumina source and fabricating an alumina fiber sheet; and
   (3) impregnating the alumina fiber sheet with a resin solution having a resin concentration of 10% by weight or less.
15. The method for producing a material having high thermal conductivity according to 14, wherein the alumina fiber is contained in the material having high thermal conductivity at 20% by weight or more.
16. The method for producing a material having high thermal conductivity according to 15, wherein the alumina fiber is contained in the material having high thermal conductivity at 30% by weight or more.
17. The method for producing a material having high thermal conductivity according to any one of 14 to 16, wherein the alumina fiber is oriented in a certain direction.
18. The method for producing a material having high thermal conductivity according to any one of 14 to 17, wherein the alumina source is at least one kind selected from the group consisting of alumina hydrate, aluminum nitrate, aluminum sulfate, aluminum acetate, aluminum chloride, aluminum hydroxide, and alumina.
19. The method for producing a material having high thermal conductivity according to any one of 14 to 18, wherein a concentration of the alumina source in the dispersion is 1% to 40% by weight.
20. The method for producing a material having high thermal conductivity according to any one of 14 to 19, wherein the water-soluble polymer is at least one kind selected from the group consisting of polyvinyl alcohol, cellulose, a cellulose derivative, polyethylene glycol, polypropylene glycol, polyvinylpyrrolidone, poly(meth)acrylic acid, a poly(meth)acrylate, and polyvinyl acetate.
21. The method for producing a material having high thermal conductivity according to any one of 14 to 20, wherein a concentration of the water-soluble polymer in the dispersion is 5% to 40% by weight.
22. The method for producing a material having high thermal conductivity according to any one of 14 to 21, wherein the resin is at least one kind selected from the group consisting of polyvinyl alcohol, a polyurethane resin, an epoxy resin, a polyimide resin, and a silicone resin.
23. The method for producing a material having high thermal conductivity according to any one of 14 to 22, wherein the firing temperature is 500°C or higher.
24. The method for producing a material having high thermal conductivity according to 23, wherein the firing temperature is 1,200°C or higher.
25. The method for producing a material having high thermal conductivity according to any one of 14 to 24, wherein the alumina fiber contains α-alumina.
26. The method for producing a material having high thermal conductivity according to any one of 14 to 25, wherein a crystallization rate of the alumina fiber into α-crystal is 50% by weight or more.
27. The method for producing a material having high thermal conductivity according to any one of 14 to 26, wherein an average fiber diameter of the alumina fibers is 50 to 2,000 nm.
28. The method for producing a material having high thermal conductivity according to 27, wherein an average fiber diameter of the alumina fibers is 100 to 1,000 nm.
29. The method for producing a material having high thermal conductivity according to any one of 14 to 28, wherein a thermal conductivity of the material having high thermal conductivity is 5 W/mK or more.
30. The method for producing a material having high thermal conductivity according to any one of 14 to 29, wherein a thermal conductivity of the material having high thermal conductivity is anisotropic and a ratio of a thermal conductivity in a direction parallel to an alumina fiber to a thermal conductivity in a direction orthogonal to the alumina fiber is 1.4 or more.

### ADVANTAGEOUS EFFECTS OF INVENTION

The material having high thermal conductivity of the present invention contains an alumina fiber in a proper amount and is thus excellent in thermal conductivity. In addition, an anisotropic heat conductive material in which heat is preferentially transmitted to the orientation direction can be obtained by orienting the alumina fiber in a certain direction. In addition, according to the method for producing a material having high thermal conductivity of the present invention, a material having high thermal conductivity, which contains an alumina fiber excellent in thermal conductivity at a proper content can be obtained by simple steps.

### BRIEF DESCRIPTION OF DRAWINGS

[FIG. 1] FIG. 1 is a schematic explanatory diagram which illustrates an electrostatic spinning method in the present invention.
[FIG. 2] FIG. 2 is a scanning electron microphotograph of an alumina fiber obtained in Example 2.
[FIG. 3] FIG. 3 is an X-ray diffraction diagram of an alumina fiber obtained in Example 2.
[FIG. 4] FIG. 4 is a scanning electron microphotograph of a composite of an alumina fiber and polyvinyl alcohol obtained in Example 7.

### DESCRIPTION OF EMBODIMENTS

### [Material having high thermal conductivity]

The material having high thermal conductivity of the present invention contains an alumina fiber sheet and a resin.

It is preferable that the alumina fiber contains α-alumina. Higher thermal conductivity can be obtained by containing α-alumina. The α-alumina is contained in the alumina fiber at preferably 50% by weight or more, more preferably 90% by weight or more, and still more preferably 99% by weight or more. In addition, α-alumina may be contained in the alumina fiber at 100% by weight but is usually contained at 99.9% by weight or less.

The alumina fiber may contain components other than α-alumina. Examples of components other than α-alumina may include γ-alumina, δ-alumina, 0-alumina, and amorphous alumina. In the case of containing components other than α-alumina, the content thereof in the alumina fiber is preferably 50% by weight or less, more preferably 10% by weight or less, and still more preferably 1% by weight or less.

The average fiber diameter of the alumina fibers is preferably 50 to 2,000 nm and more preferably 100 to 1,000 nm. If the average fiber diameter is in the above range, compounding with the resin is easily achieved. Incidentally, in the present invention, the average fiber diameter is a value determined from a scanning microphotograph of alumina fiber by using image analysis software. Moreover, it is preferable that the alumina fiber is non-porous.

Examples of the resin contained in the material having high thermal conductivity of the present invention may include polyvinyl alcohol, polyurethane resins such as polyurethane elastomer, epoxy resins, polyimide-based resins, silicone resins, polyolefin-based resins such as polyvinylidene fluoride, (meth)acrylic resins such as polymethyl methacrylate, polyester resins such as polyethylene succinate/adipate, polystyrene-based resins such as polystyrene, high impact polystyrene, acrylonitrile-styrene copolymer, acrylonitrile-butadiene-styrene copolymer, styrene-butadiene-styrene copolymer, and methyl methacrylate-styrene copolymer, polyamide-based resins, polyethylene, polypropylene, ethylene-vinyl acetate copolymer, ethylene-vinyl alcohol copolymer, ethylene-ethyl acrylate copolymer, polycarbonate-based resins, vinyl chloride-based resins, polyacrylonitrile, polyethylene terephthalate, polybutylene terephthalate, polyethylene naphthalate, polybutylene naphthalate, polylactic acid, poly-3-hydroxybutyric acid, polycaprolactone, polybutylene succinate, polyethylene oxide, polyphenylene ether-based resins, polyacetal-based resins, polyether sulfone resins, polysulfone resins, polyphenylene sulfide resins, polyglycolic acid, modified starch, cellulose acetate, cellulose triacetate, chitin, chitosan, and lignin. Among these, polyvinyl alcohol, polyurethane resins, epoxy resins, polyimide resins, silicone resins and the like are preferable. The resins may be used singly or in combination of two or more kinds thereof.

The lower limit of the content of the alumina fiber sheet in the material having high thermal conductivity of the present invention is 20% by weight but is preferably 30% by weight, more preferably 40% by weight, and still more preferably 45% by weight. Moreover, the upper limit of the content is 90% by weight but is preferably 80% by weight, more preferably 70% by weight, still more preferably 60% by weight, and yet more preferably 55% by weight. High thermal conductivity is obtained by containing the alumina fiber sheet in the above range.

The material having high thermal conductivity of the present invention has high thermal conductivity. Specifically, the thermal conductivity can be set to 5 W/mK or more, preferably 10 W/mK or more, and more preferably 15 W/mK or more.

Moreover, the material having high thermal conductivity of the present invention can be set to have anisotropy in thermal conductivity by orientating the alumina fiber in the alumina fiber sheet in a certain direction. In this case, the ratio of the thermal conductivity in the direction parallel to the alumina fiber to the thermal conductivity in the direction orthogonal to the alumina fiber is preferably 1.4 or more, more preferably 1.5 or more, still more preferably 2.0 or more, and yet more preferably 2.5 or more. Incidentally, the upper limit of the ratio is not particularly limited but is usually about 30.

In addition, it is preferable that the material having high thermal conductivity of the present invention is electrically insulating.

### [Method for producing material having high thermal conductivity]

The method for producing a material having high thermal conductivity of the present invention includes the steps of:
(1) fabricating an alumina fiber sheet using a dispersion containing an alumina source and a water-soluble polymer as a spinning material by an electrostatic spinning method or a dry spinning method;
(2) firing the alumina fiber sheet fabricated; and
(3) impregnating the alumina fiber sheet fired with a resin solution having a resin concentration of 10% by weight or less.

### [Step (1)]

The step (1) is a step of fabricating a fiber sheet containing an alumina source using a dispersion containing the alumina source and a water-soluble polymer as a spinning material by an electrostatic spinning method or a dry spinning method.

As the alumina source, alumina hydrate, aluminum nitrate, aluminum sulfate, aluminum acetate, aluminum chloride, aluminum hydroxide, alumina and the like are preferable, and alumina monohydrate is particularly preferable. As the alumina source, boehmite particles, alumina sol and the like can be suitably used. The boehmite particles are not particularly limited, but examples thereof may include "DISPERAL" and "DISPAL" manufactured by SASOL ltd., "Cerasur" (registered trademark) manufactured by KAWAI LIME INDUSTRY Co., Ltd., and "Boehmite Powder" manufactured by TAIMEI CHEMICALS CO., LTD. In addition, the alumina sol particles are not particularly limited, but examples thereof may include Alumina Sol "AS-200", "AS-550", and "AS-520" manufactured by Nissan Chemical Corporation, Alumina Sol "10A", "10C", "10D", "A2", "CSA-110A", "F-1000", and "F-3000" manufactured by Kawaken Fine Chemical Co., Ltd., Viral (registered trademark) "Al-L7", "Al-ML15", "Al-C20", and "AS-l10" manufactured by Taki Chemical Co., Ltd. The alumina sources may be used singly or in combination of two or more kinds thereof. The content of the alumina source in the dispersion is preferably 1% to 40% by weight, more preferably 2% to 30% by weight, and still more preferably 3% to 20% by weight.

Examples of the water-soluble polymer may include polyvinyl alcohol, cellulose, a cellulose derivative, polyethylene glycol, polypropylene glycol, polyvinylpyrrolidone, poly(meth)acrylic acid, a poly(meth)acrylate, and polyvinyl acetate. These may be used singly or in combination of two or more kinds thereof. The content of the water-soluble polymer in the dispersion is preferably 5% to 40% by weight, more preferably 5% to 30% by weight, and still more preferably 5% to 20% by weight.

As a solvent which can be used in the dispersion, water which can dissolve the water-soluble polymer and can disperse the alumina source is preferable. Furthermore, two or more kinds of solvents soluble in water may be mixed. Examples of the solvent miscible with water may include acetone, methanol, ethanol, isopropyl alcohol, butanol, ethyl methyl ketone (MEK), isobutyl methyl ketone (MIBK), propylene glycol monomethyl ether (PGME), propylene glycol monomethyl ether acetate (PGMEA), propylene glycol monoethyl ether, butyl cellosolve, tetrahydrofuran (THF), 1,4-dioxane, N,N-dimethylformamide (DMF), N,N-dimethylacetamide (DMAc), N-methyl-2-pyrrolidone (NMP), cyclohexanone, ethyl lactate, diethylene glycol monoethyl ether, γ-butyrolactone, formic acid, acetic acid, and trifluoroacetic acid. In the case of containing other solvents, the content thereof is not particularly limited as long as the water-soluble polymer can be dissolved.

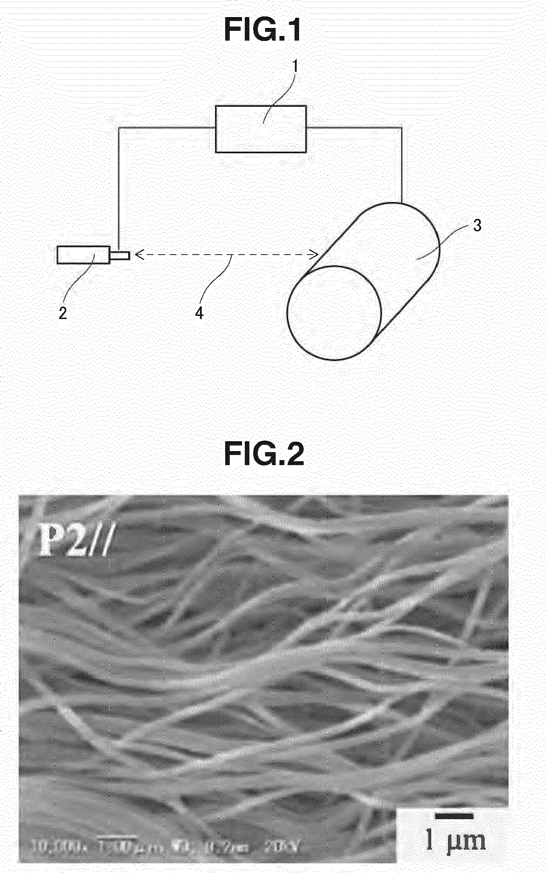

FIG. 1 is a schematic explanatory diagram which illustrates an electrostatic spinning method in the present invention. In the electrostatic spinning method, a spinning solution is ejected from a metal nozzle 2 to which a voltage is applied by a voltage supply apparatus 1 to a grounded collector 3. In this method, the solvent is volatilized while the spinning solution is scattered, and the solid components are accumulated in the collector 3 in the form of fibers.

The electrostatic spinning method can be carried out using a commercially available apparatus. The spinning conditions are appropriately selected, and, for example, a spinning distance 4 (the distance between the metal nozzle and the drum type collector) can be set to 5 to 30 cm, the applied voltage between the metal nozzle and the drum type collector can be set to 5 to 40 kV, the injection capacity of spinning solution can be set to 0.1 to 5.0 mL/hour, and the number of revolutions of the drum type collector can be set to 50 to 4,000 revolutions/min.

At this time, a sheet in which alumina fibers are oriented in a certain direction can be obtained as the fibers ejected from the metal nozzle are wound around the drum rotating at a high speed. It is preferable that the alumina fibers are oriented in a certain direction since a thermally conductive path is efficiently formed, and further, an anisotropy is also imparted.

The dry spinning method can be carried out using a commercially available apparatus. Spinning conditions are appropriately selected, and for example, the spinning temperature can be set to preferably 65°C to 105°C, more preferably 70°C to 95°C, and still more preferably 75°C to 85°C.

### [Step (2)]

The step (2) is a step of firing the fiber sheet which contains an alumina source and has been fabricated in the step (1) and thus fabricating an alumina fiber sheet. The firing temperature is preferably 500°C or higher, more preferably 800°C or higher, still more preferably 1,000°C or higher, and yet more preferably 1,200°C or higher. In particular, when firing is performed at 1,200°C or higher, the alumina in the alumina fiber sheet to be obtained is converted to α-crystals and higher thermal conductivity can be obtained.

The firing can be performed using a firing furnace such as an electric furnace or a gas furnace. In addition, the firing can be performed in an air atmosphere and an oxygen atmosphere, but conditions under which carbon components derived from polyvinyl alcohol are eliminated are preferable.

The firing time is preferably 1 hour or longer, more preferably 3 hours or longer, and still more preferably 5 hours or longer. The upper limit of the firing time is not particularly limited but is preferably 10 hours and more preferably 8 hours. If the firing time is in the above range, the elimination of carbon components derived from polyvinyl alcohol and the crystallization of alumina into α-crystals proceed. At this time, the crystallization rate of alumina into α-crystals is preferably 50% by weight or more, more preferably 90% by weight or more, and still more preferably 99% by weight or more. The crystallization rate into α-crystals is at most 100% by weight but is usually 99.9% by weight or less.

Incidentally, it is preferable to raise the temperature at a rate of temperature rise of 20°C/min or less until the temperature reaches the firing temperature. The rate of temperature rise is more preferably 15°C/min or less and more preferably 10°C/min or less. If the rate of temperature rise is in the above range, the elimination of carbon components derived from polyvinyl alcohol and the crystallization of alumina into α-crystals proceed.

The average fiber diameter of the alumina fibers obtained through firing is preferably 50 to 2,000 nm and more preferably 100 to 1,000 nm. If the average fiber diameter is in the above range, compounding with the resin is easily achieved.

In addition, the thickness of the alumina fiber sheet is preferably 10 to 2,000 µm, more preferably 20 to 1,500 µm, and still more preferably 40 to 1,000 µm.

### [Step (3)]

The step (3) is a step of impregnating the alumina fiber sheet fabricated in the step (2) with a resin solution having a resin concentration of 10% by weight or less. Through this step, a composite of an alumina fiber and a resin can be formed and a material having high thermal conductivity can be obtained. Incidentally, only one alumina fiber sheet may be contained in the composite or a plurality of alumina fiber sheets may be contained in the composite.

It is required to properly contain alumina fibers in order that the composite to be obtained exhibits high thermal conductivity. In the present invention, a composite properly containing alumina fibers is obtained by using a resin solution containing the above-described resin at a concentration of 10% by weight or less. The resin concentration in the resin solution is preferably 10% by weight or less, more preferably 7% by weight or less, and still more preferably 5% by weight or less. If the resin concentration exceeds 10% by weight, particularly 15% by weight or more, the proportion of resin in the resin solution is high, thus the content of resin in the composite is high, and the content of alumina fiber is low, and the composite may not exhibit high thermal conductivity. Incidentally, the resins may be used singly or in combination of two or more kinds thereof.

The solvent to be used in the resin solution is not particularly limited as long as it can dissolve the resin. Examples thereof may include water, acetone, methanol, ethanol, isopropyl alcohol, butanol, MEK, MIBK, PGME, PGMEA, propylene glycol monoethyl ether, butyl cellosolve, THF, 1,4-dioxane, DMF, DMAc, NMP, cyclohexanone, ethyl lactate, diethylene glycol monoethyl ether, γ-butyrolactone, formic acid, acetic acid, and trifluoroacetic acid. The solvents may be used singly or in mixture of two or more kinds thereof.

Examples of a method for impregnating the alumina fiber sheet fired with the resin solution may include a method in which a solution in which the resin is dissolved is dropped and a method in which a solution in which a monomer is dissolved is dropped and the monomer is reacted in the subsequent heating step.

After the fired alumina fiber sheet has been impregnated with the resin solution, the pressure is reduced and heating is performed to remove the solvent and cure the resin, whereby a composite is obtained. At this time, the pressure is reduced to preferably 1,000 Pa or less and more preferably 100 Pa or less. The heating is not particularly limited as long as the solvent can be removed and the resin can be cured, but usually, heating is performed at preferably 100°C to 140°C and more preferably 110°C to 130°C. Moreover, usually the heating time is preferably 30 minutes or longer and more preferably 1 hour or longer.

By the method described above, it is possible to produce a composite of an alumina fiber sheet and a resin, which contains the alumina fiber sheet at 20% to 90% by weight. The thickness of the composite is preferably 10 to 3,000 µm, more preferably 20 to 2,000 µm, and still more preferably 40 to 1,500 µm.

The material having high thermal conductivity of the present invention can be utilized as a heat dissipating material, for example, can be suitably utilized as a heat dissipating material for heat dissipating members such as heat dissipating sheets, heat dissipating tapes, heat dissipating circuit boards, heat dissipating housings, heat dissipating sealants, heat sinks, and heat pipes. Moreover, these heat dissipating members can be suitably utilized, for example, in devices such as LED, power semiconductors, CPU, and lithium ion batteries. Furthermore, these heat dissipation devices can be suitably utilized, for example, in digital home appliances such as mobile phones, smartphones, digital cameras, television sets, hard disk recorders, tablet computers, laptop computers, and desktop computers, next-generation vehicles such as hybrid vehicles, electric vehicles, and fuel cell vehicles, next-generation lighting systems such as home lighting, industrial lighting, and vehicle lighting, next-generation power generators such as solar cells, fuel cells, and geothermal power generation, and next-generation energy carrier manufacturing apparatuses for hydrogen production by water electrolysis and the like.

### EXAMPLES

Hereinafter, the present invention is more specifically described with reference to Examples and Comparative Examples, but the present invention is not limited to the following Examples. Incidentally, the apparatuses used and the measurement conditions are as follows. Incidentally, the average fiber diameter of alumina fibers is an average value of the fiber diameters measured at ten places on the scanning microphotograph of alumina fibers using image analysis software "Image J". In addition, in Examples, the apparatuses used and conditions for sample preparation and physical property analysis are as follows.
(1) Electrostatic spinning method:
   Infusion pump (syringe pump): FP-1000 manufactured by MELQUEST Ltd.,
   high pressure power source: HR-40R0.75 manufactured by MATSUSADA PRECISION Inc.
(2) Scanning electron microscope:
   VE-9800 manufactured by KEYENCE CORPORATION,
   Miniscope TM3000 manufactured by Hitachi High-Technologies Corporation
(3) X-ray diffractometer: MiniFlex 2 manufactured by Rigaku Corporation
(4) Thermogravimetric analyzer:
   Thermo Plus evo manufactured by Rigaku Corporation or
   TG-DTA 2000SA manufactured by BRUKER
(5) Thermal diffusivity measurement apparatus:
   Thermo Wave Analyzer TA-35 manufactured by Bethel Co., Ltd.

### [1] Fabrication of material having high thermal conductivity

### [Example 1]

To 10.0 parts by weight of a 10% by weight aqueous solution of polyvinyl alcohol (average polymerization degree: 1,500, saponification degree: 99%), 0.598 part by weight of boehmite powder (DISPERAL P2 manufactured by SASOL ltd., alumina component: 72%, primary particle system: 12.5 nm) was added and dispersed therein by being stirred.

The aqueous dispersion obtained was used as a spinning solution, and 2 mL thereof was filled in a syringe having a metal nozzle attached to the tip. A rotating drum having a diameter of 15 cm was used as the collector for fiber collection. The metal nozzle and the drum collector were electrically connected to a voltage supply apparatus. A voltage of 20 kV was applied to the metal nozzle side and the drum collector side was grounded by the voltage supply apparatus. The distance between the metal nozzle and the drum collector was adjusted to 15 cm. The drum collector was rotated at 4,000 revolutions per minute. A fiber composed of polyvinyl alcohol and boehmite was formed on the rotating drum collector and a fiber sheet containing an alumina source was obtained by ejecting the spinning solution from the syringe toward the rotating drum collector at an extrusion speed of 1.0 mL/h.

### [Example 2]

The fiber sheet which contained an alumina source and was obtained in Example 1 was placed in an electric furnace, and the temperature was raised to a firing temperature of 1,200°C at a rate of temperature rise of 10°C/min. The fiber sheet was fired at 1,200°C for 5 hours, then allowed to cool, and cooled to room temperature, thereby obtaining an alumina fiber sheet. A scanning electron microphotograph of the alumina fiber obtained is illustrated in FIG. 2. The average fiber diameter of the alumina fibers obtained was about 230 nm.

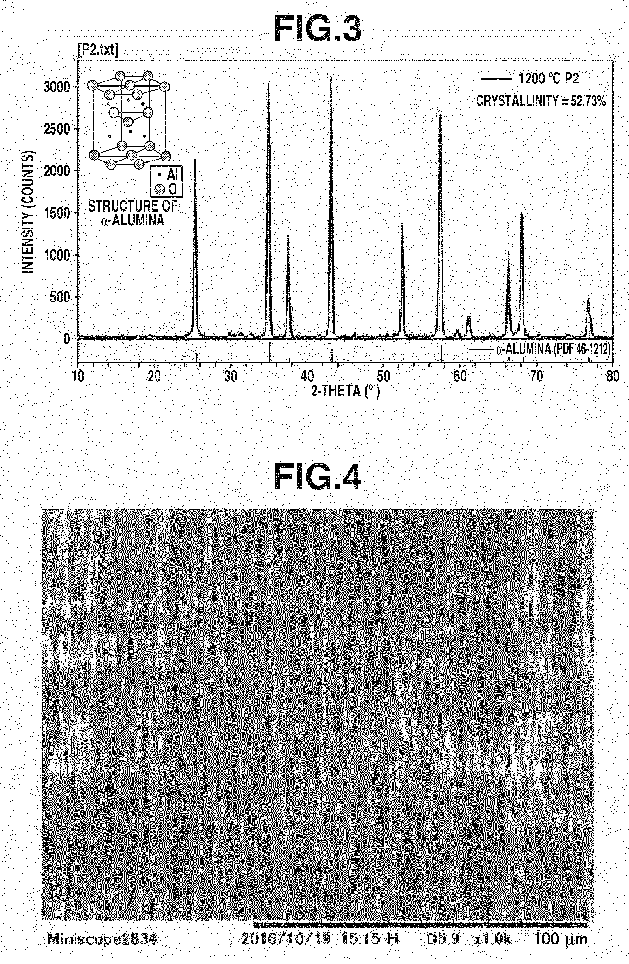

The X-ray diffraction image (Ni filter, CuKα ray, 30 kV, 15 mA) of the alumina fiber sheet obtained is illustrated in FIG. 3. From the results illustrated in FIG. 3, the alumina fiber sheet obtained contained α-alumina, and the crystallization rate into α-crystal was 52.73%.

### [Example 3]

To 10.0 parts by weight of a 10% by weight aqueous solution of polyvinyl alcohol (average polymerization degree: 1,500, saponification degree: 99%), 2.77 parts by weight of alumina sol (AS-550 manufactured by Nissan Chemical Corporation, alumina component: 15.5%) was added and dispersed therein by being stirred.

The aqueous dispersion obtained was used as a spinning solution, and 2 mL thereof was filled in a syringe having a metal nozzle attached to the tip. A rotating drum having a diameter of 15 cm was used as the collector for fiber collection. The metal nozzle and the drum collector were electrically connected to a voltage supply apparatus. A voltage of 20 kV was applied to the metal nozzle side and the drum collector side was grounded by the voltage supply apparatus. The distance between the metal nozzle and the drum collector was adjusted to 15 cm. The drum collector was rotated at 4,000 revolutions per minute. A fiber composed of polyvinyl alcohol and alumina sol was formed on the rotating drum collector and a fiber sheet containing an alumina source was obtained by ejecting the spinning solution from the syringe toward the rotating drum collector at an extrusion speed of 1.0 mL/h.

### [Example 4]

The fiber sheet which contained an alumina source and was obtained in Example 3 was placed in an electric furnace, and the temperature was raised to a firing temperature of 1,500°C at a rate of temperature rise of 10°C/min. The fiber sheet was fired at 1,500°C for 5 hours, then allowed to cool, and cooled to room temperature, thereby obtaining an alumina fiber sheet. The average fiber diameter of the alumina fibers obtained was about 240 nm.

### [Example 5]

To 10.0 parts by weight of a 10% by weight aqueous solution of polyvinyl alcohol (average polymerization degree: 1,500, saponification degree: 99%), 3.98 parts by weight of alumina sol (AS-200 manufactured by Nissan Chemical Corporation, alumina component: 10.8%) was added and dispersed therein by being stirred.

The aqueous dispersion obtained was used as a spinning solution, and 2 mL thereof was filled in a syringe having a metal nozzle attached to the tip. A rotating drum having a diameter of 15 cm was used as the collector for fiber collection. The metal nozzle and the drum collector were electrically connected to a voltage supply apparatus. A voltage of 20 kV was applied to the metal nozzle side and the drum collector side was grounded by the voltage supply apparatus. The distance between the metal nozzle and the drum collector was adjusted to 15 cm. The drum collector was rotated at 4,000 revolutions per minute. A fiber composed of polyvinyl alcohol and alumina sol was formed on the rotating drum collector and a fiber sheet containing an alumina source was obtained by ejecting the spinning solution from the syringe toward the rotating drum collector at an extrusion speed of 1.0 mL/h.

### [Example 6]

The fiber sheet which contained an alumina source and was obtained in Example 5 was placed in an electric furnace, and the temperature was raised to a firing temperature of 1,500°C at a rate of temperature rise of 10°C/min. The fiber sheet was fired at 1,500°C for 5 hours, then allowed to cool, and cooled to room temperature, thereby obtaining an alumina fiber sheet. The average fiber diameter of the alumina fibers obtained was about 169 nm.

### [Example 7]

A 5.0% by weight aqueous solution of polyvinyl alcohol (average polymerization degree: 1,500, saponification degree: 99%) was prepared, the alumina fiber sheet obtained in Example 2 was impregnated with the 5.0% by weight aqueous solution of polyvinyl alcohol. Water removal and heat curing of polyvinyl alcohol were performed at 120°C in a vacuum, thereby obtaining a composite of an alumina fiber sheet and polyvinyl alcohol. The composite was obtained in the form of a sheet and had a thickness of 101 µm.

A scanning electron microphotograph of the composite obtained is illustrated in FIG. 4. It has been found that the alumina fiber forms a composite with polyvinyl alcohol in a state of being oriented in a certain direction.

The content of alumina fiber sheet in the composite obtained was measured by raising the temperature of the composite to 500°C at 10°C/min using a thermogravimetric analyzer. The content of alumina fiber sheet in the composite was 49.5% by weight (24.0% by volume).

### [Example 8]

A 10.0% by weight aqueous solution of polyvinyl alcohol (average polymerization degree: 1,500, saponification degree: 99%) was prepared, the alumina fiber sheet obtained in Example 2 was impregnated with the 10.0% by weight aqueous solution of polyvinyl alcohol. Water removal and heat curing of polyvinyl alcohol were performed at 120°C in a vacuum, thereby obtaining a composite of an alumina fiber sheet and polyvinyl alcohol. The composite was obtained in the form of a sheet and had a thickness of 78 µm.

The content of alumina fiber sheet in the composite obtained was measured by raising the temperature of the composite to 500°C at 10°C/min using a thermogravimetric analyzer. The content of alumina fiber sheet in the composite was 40.0% by weight (17.6% by volume).

### [Example 9]

A 5.0% by weight aqueous solution of polyvinyl alcohol (average polymerization degree: 1,500, saponification degree: 99%) was prepared, the alumina fiber sheet obtained in Example 2 was impregnated with the 5.0% by weight aqueous solution of polyvinyl alcohol. Water removal and heat curing of polyvinyl alcohol were performed at 120°C in a vacuum, thereby obtaining a composite of an alumina fiber sheet and polyvinyl alcohol. The composite was obtained in the form of a sheet and had a thickness of 41 µm.

The content of alumina fiber sheet in the composite obtained was measured by raising the temperature of the composite to 500°C at 10°C/min using a thermogravimetric analyzer. The content of alumina fiber sheet in the composite was 71.5% by weight (44.6% by volume).

### [Example 10]

A 10.0% by weight aqueous solution of polyvinyl alcohol (average polymerization degree: 1,500, saponification degree: 99%) was prepared, the alumina fiber sheet obtained in Example 4 was impregnated with the 10.0% by weight aqueous solution of polyvinyl alcohol. Water removal and heat curing of polyvinyl alcohol were performed at 120°C in a vacuum, thereby obtaining a composite of an alumina fiber sheet and polyvinyl alcohol. The composite was obtained in the form of a sheet and had a thickness of 69 µm.

The content of alumina fiber sheet in the composite obtained was measured by raising the temperature of the composite to 500°C at 10°C/min using a thermogravimetric analyzer. The content of alumina fiber sheet in the composite was 32.0% by weight (13.1% by volume).

### [Example 11]

An aqueous solution (solid content: 7.5% by weight) of a polyurethane emulsion (SUPERFLEX (registered trademark) 300 manufactured by DKS Co., Ltd., solid content: 30% by weight) diluted to one fourth was prepared, and the alumina fiber sheet obtained in Example 2 was impregnated with the diluted aqueous solution of polyurethane emulsion (solid content: 7.5% by weight). Water removal and heat curing of polyurethane were performed at 120°C in a vacuum, thereby obtaining a composite of an alumina fiber sheet and polyurethane. The composite was obtained in the form of a sheet and had a thickness of 60 µm.

The content of alumina fiber sheet in the composite obtained was measured by raising the temperature of the composite to 500°C at 10°C/min using a thermogravimetric analyzer. The content of alumina fiber sheet in the composite was 30.8% by weight (12.1% by volume).

### [Example 12]

An aqueous solution (solid content: 10% by weight) of a polyurethane emulsion (SUPERFLEX 300 manufactured by DKS Co., Ltd., solid content: 30% by weight) diluted to one third was prepared, and the alumina fiber sheet obtained in Example 2 was impregnated with the diluted aqueous solution of polyurethane emulsion (solid content: 10% by weight). Water removal and heat curing of polyurethane were performed at 120°C in a vacuum, thereby obtaining a composite of an alumina fiber sheet and polyurethane. The composite was obtained in the form of a sheet and had a thickness of 97 µm.

The content of alumina fiber sheet in the composite obtained was measured by raising the temperature of the composite to 500°C at 10°C/min using a thermogravimetric analyzer. The content of alumina fiber sheet in the composite was 61.2% by weight (32.7% by volume).

### [Example 13]

An aqueous solution (solid content: 1.5% by weight) of a polyurethane emulsion (SUPERFLEX 300 manufactured by DKS Co., Ltd., solid content: 30% by weight) diluted to one twentieth was prepared, and the alumina fiber sheet obtained in Example 2 was impregnated with the diluted aqueous solution of polyurethane emulsion (solid content: 1.5% by weight). Water removal and heat curing of polyurethane were performed at 120°C in a vacuum, thereby obtaining a composite of an alumina fiber sheet and polyurethane. The composite was obtained in the form of a sheet and had a thickness of 82 µm.

The content of alumina fiber sheet in the composite obtained was measured by raising the temperature of the composite to 500°C at 10°C/min using a thermogravimetric analyzer. The content of alumina fiber sheet in the composite was 84.7% by weight (63.1% by volume).

### [Example 14]

Into a glass container, 5.0 parts by weight of a bisphenol A-type epoxy resin (jER (registered trademark) 828 manufactured by Mitsubishi Chemical Corporation), 2.8 parts by weight of a phenol novolac resin (PHENOLITE (registered trademark) TD2131 manufactured by DIC Corporation), 0.050 part by weight of 2-ethyl-4-methylimidazole (manufactured by Kanto Chemical Co., Ltd.), and 70.2 parts by weight of NMP (manufactured by Junsei Chemical Co., Ltd.) were added and stirred to prepare an NMP solution having a solid content of 10% by weight. The alumina fiber sheet obtained in Example 2 was impregnated with the NMP solution (solid content: 10% by weight).
By performing heating at 100°C for 5 minutes and then at 180°C for 1 hour, a composite of an alumina fiber sheet and an epoxy resin was obtained. The composite was obtained in the form of a sheet and had a thickness of 52 µm.

The content of alumina fiber sheet in the composite obtained was measured by raising the temperature of the composite to 1,000°C at 20°C/min using a thermogravimetric analyzer. The content of alumina fiber sheet in the composite was 38.5% by weight (18.4% by volume).

### [Example 15]

Into a glass container, 5.0 parts by weight of a bisphenol A-type epoxy resin (jER 828 manufactured by Mitsubishi Chemical Corporation), 2.8 parts by weight of a phenol novolac resin (PHENOLITE TD2131 manufactured by DIC Corporation), 0.050 part by weight of 2-ethyl-4-methylimidazole (manufactured by Kanto Chemical Co., Ltd.), and 148.3 parts by weight of NMP (manufactured by Junsei Chemical Co., Ltd.) were added and stirred to prepare an NMP solution having a solid content of 5.0% by weight. The alumina fiber sheet obtained in Example 2 was impregnated with the NMP solution (solid content: 5.0% by weight). By performing heating at 100°C for 5 minutes and then at 180°C for 1 hour, a composite of an alumina fiber sheet and an epoxy resin was obtained. The composite was obtained in the form of a sheet and had a thickness of 51 µm.

The content of alumina fiber sheet in the composite obtained was measured by raising the temperature of the composite to 1,000°C at 20°C/min using a thermogravimetric analyzer. The content of alumina fiber sheet in the composite was 74.2% by weight (50.9% by volume).

### [Example 16]

Into a glass container, 5.0 parts by weight of triglycidyl isocyanurate (TEPIC (registered trademark) -L manufactured by Nissan Chemical Corporation), 5.2 parts by weight of a phenol novolac resin (PHENOLITE TD2131 manufactured by DIC Corporation), 0.050 part by weight of 2-ethyl-4-methylimidazole (manufactured by Kanto Chemical Co., Ltd.), and 193.9 parts by weight of NMP (manufactured by Junsei Chemical Co., Ltd.) were added and stirred to prepare an NMP solution having a solid content of 5.0% by weight. The alumina fiber sheet obtained in Example 2 was impregnated with the NMP solution (solid content: 5.0% by weight). By performing heating at 100°C for 5 minutes and then at 180°C for 1 hour, a composite of an alumina fiber sheet and an epoxy resin was obtained. The composite was obtained in the form of a sheet and had a thickness of 117 µm.

The content of alumina fiber sheet in the composite obtained was measured by raising the temperature of the composite to 1,000°C at 20°C/min using a thermogravimetric analyzer. The content of alumina fiber sheet in the composite was 55.4% by weight (30.9% by volume).

### [Example 17]

Into a glass container, 5.0 parts by weight of tris(7,8-epoxyoctyl) isocyanurate (TEPIC-FL manufactured by Nissan Chemical Corporation), 2.8 parts by weight of a phenol novolac resin (PHENOLITE TD2131 manufactured by DIC Corporation), 0.050 part by weight of 2-ethyl-4-methylimidazole (manufactured by Kanto Chemical Co., Ltd.), and 149.4 parts by weight of NMP (manufactured by Junsei Chemical Co., Ltd.) were added and stirred to prepare an NMP solution having a solid content of 5.0% by weight. The alumina fiber sheet obtained in Example 2 was impregnated with the NMP solution (solid content: 5.0% by weight). By performing heating at 100°C for 5 minutes and then at 180°C for 1 hour, a composite of an alumina fiber sheet and an epoxy resin was obtained. The composite was obtained in the form of a sheet and had a thickness of 150 µm.

The content of alumina fiber sheet in the composite obtained was measured by raising the temperature of the composite to 1,000°C at 20°C/min using a thermogravimetric analyzer. The content of alumina fiber sheet in the composite was 67.0% by weight (42.2% by volume).

### [Example 18]

Into a glass container, 5.0 parts by weight of an alicyclic epoxy resin (Celloxide (registered trademark) 21021P, manufactured by DAICEL CORPORATION), 4.1 parts by weight of a phenol novolac resin (PHENOLITE TD2131 manufactured by DIC Corporation), 0.050 part by weight of 2-ethyl-4-methylimidazole (manufactured by Kanto Chemical Co., Ltd.), and 172.8 parts by weight of NMP (manufactured by Junsei Chemical Co., Ltd.) were added and stirred to prepare an NMP solution having a solid content of 5% by weight. The alumina fiber sheet obtained in Example 2 was impregnated with the NMP solution (solid content: 5.0% by weight). By performing heating at 100°C for 5 minutes and then at 180°C for 1 hour, a composite of an alumina fiber sheet and an epoxy resin was obtained. The composite was obtained in the form of a sheet and had a thickness of 113 µm.

The content of alumina fiber sheet in the composite obtained was measured by raising the temperature of the composite to 1,000°C at 20°C/min using a thermogravimetric analyzer. The content of alumina fiber sheet in the composite was 85.3% by weight (67.6% by volume).

### [Example 19]

Into a glass container, 6.7 parts by weight of pyromellitic anhydride (manufactured by Tokyo Chemical Industry Co., Ltd.), 2.7 parts by weight of para-phenylene diamine (manufactured by Tokyo Chemical Industry Co., Ltd.), 1.6 parts by weight of 4,4"-diamino-p-terphenyl, and 89 parts by weight of NMP (manufactured by Junsei Chemical Co., Ltd.) were added and heated and stirred at 50°C for 12 hours to prepare an NMP solution of polyamic acid having a solid content of 11% by weight. By diluting the NMP solution with NMP (manufactured by Junsei Chemical Co., Ltd.), an NMP solution of polyamic acid having a solid content of 5.5% by weight was prepared. The alumina fiber sheet obtained in Example 6 was impregnated with the NMP solution (solid content: 5.5% by weight). The polyamic acid was cured by performing heating at 100°C for 1 hour and then at 400°C for 2 hours in a nitrogen atmosphere, whereby a composite of an alumina fiber sheet and a polyimide resin was obtained. The composite was obtained in the form of a sheet and had a thickness of 80 µm.

The content of alumina fiber sheet in the composite obtained was measured by raising the temperature of the composite to 1,000°C at 20°C/min using a thermogravimetric analyzer. The content of alumina fiber sheet in the composite was 21.1% by weight (8.9% by volume).

### [Example 20]

A toluene solution (solid content: 10% by weight) was prepared by diluting a silicone resin (KR-255 manufactured by Shin-Etsu Chemical Co., Ltd., solid content: 50% by weight) to one fifth with toluene (manufactured by Tokyo Chemical Industry Co., Ltd.). With 81 parts by weight of the diluted solution of silicone resin (solid content: 10% by weight), 4.0 parts by weight of the alumina fiber sheet obtained in Example 2 was impregnated. Toluene removal and heat curing of silicone resin were performed at 150°C, thereby obtaining a composite of an alumina fiber sheet and a silicone resin. The composite was obtained in the form of a sheet and had a thickness of 46 µm.

The content of alumina fiber sheet in the composite was calculated as 33.1% by weight (21.1% by volume).

### [Comparative Example 1]

A 15% by weight aqueous solution of polyvinyl alcohol (average polymerization degree: 1,500, saponification degree: 99%) was prepared, the alumina fiber sheet obtained in Example 2 was impregnated with the 15% by weight aqueous solution of polyvinyl alcohol. Water removal and heat curing of polyvinyl alcohol were performed at 120°C in a vacuum, thereby obtaining a composite of an alumina fiber sheet and polyvinyl alcohol. The composite was obtained in the form of a sheet and had a thickness of 207 µm.

The content of alumina fiber sheet in the composite obtained was measured by raising the temperature of the composite to 500°C at 10°C/min using a thermogravimetric analyzer. The content of alumina fiber sheet in the composite was 8.3% by weight (2.8% by volume).

### [Comparative Example 2]

Into a glass container, 5.0 parts by weight of a bisphenol A-type epoxy resin (jER 828 manufactured by Mitsubishi Chemical Corporation) and 2.8 parts by weight of a phenol novolac resin (PHENOLITE TD2131 manufactured by DIC Corporation) were added and mixed by being stirred at 90°C for 5 minutes. Thereafter, vacuum degassing was performed for about 5 minutes using a diaphragm pump, then 0.050 part by weight of 2-ethyl-4-methylimidazole (manufactured by Kanto Chemical Co., Ltd.) was added to the mixture, and heating and mixing were further performed for 5 minutes. The melt was sandwiched between two glass plates subjected to a release treatment via a 100 µm spacer, and heated at 100°C for 5 minutes and then at 180°C for 1 hour, thereby obtaining an epoxy resin sheet cured. The film thickness of the sheet obtained was 102 µm.

### [Comparative Example 3]

Into a glass container, 5.0 parts by weight of a bisphenol A-type epoxy resin (jER 828 manufactured by Mitsubishi Chemical Corporation), 2.8 parts by weight of a phenol novolac resin (PHENOLITE TD2131 manufactured by DIC Corporation), 0.050 part by weight of 2-ethyl-4-methylimidazole (manufactured by Kanto Chemical Co., Ltd.), and 7.8 parts by weight of NMP (manufactured by Junsei Chemical Co., Ltd.) were added and stirred to prepare an NMP solution having a solid content of 50% by weight. The alumina fiber sheet obtained in Example 2 was impregnated with the NMP solution (solid content: 50% by weight). By performing heating at 100°C for 5 minutes and then at 180°C for 1 hour, a composite of an alumina fiber sheet and an epoxy resin was obtained. The composite was obtained in the form of a sheet and had a thickness of 151 µm.

The content of alumina fiber sheet in the composite obtained was measured by raising the temperature of the composite to 1,000°C at 20°C/min using a thermogravimetric analyzer. The content of alumina fiber sheet in the composite was 10.3% by weight (4.0% by volume).

### [Comparative Example 4]

Into a glass container, 5.0 parts by weight of a bisphenol A-type epoxy resin (jER 828 manufactured by Mitsubishi Chemical Corporation) and 2.8 parts by weight of a phenol novolac resin (PHENOLITE TD2131 manufactured by DIC Corporation) were added and mixed by being stirred at 90°C for 5 minutes. Thereafter, vacuum degassing was performed for about 5 minutes using a diaphragm pump, then 0.050 part by weight of 2-ethyl-4-methylimidazole (manufactured by Kanto Chemical Co., Ltd.) was added to the mixture, and heating and mixing were further performed for 5 minutes. The alumina fiber sheet obtained in Example 2 was impregnated with this melt. By performing heating at 100°C for 5 minutes and then at 180°C for 1 hour, a composite of an alumina fiber sheet and an epoxy resin was obtained. The composite was obtained in the form of a sheet and had a thickness of 109 µm.

The content of alumina fiber sheet in the composite obtained was measured by raising the temperature of the composite to 1,000°C at 20°C/min using a thermogravimetric analyzer. The content of alumina fiber sheet in the composite was 12.0% by weight (4.7% by volume).

### [2] Evaluation of material having high thermal conductivity

### [Example 21]

The thermal diffusivity of the composite of an alumina fiber sheet and polyvinyl alcohol obtained in Example 7 was measured. The calculation from the thermal diffusivity to the thermal conductivity was performed by calculating the specific gravity and specific heat of the composite from each content using the specific gravity of alumina of 3,890 kg/m³, the specific heat of alumina of 750 J/kg°C, the specific gravity of polyvinyl alcohol of 1,250 kg/m³, and the specific heat of polyvinyl alcohol of 1,680 J/kg°C.

### [Example 22]

The thermal diffusivity of the composite of an alumina fiber sheet and polyvinyl alcohol obtained in Example 8 was measured in the same manner as in Example 21.

### [Example 23]

The thermal diffusivity of the composite of an alumina fiber sheet and polyvinyl alcohol obtained in Example 9 was measured in the same manner as in Example 21.

### [Example 24]

The thermal diffusivity of the composite of an alumina fiber sheet and polyvinyl alcohol obtained in Example 10 was measured in the same manner as in Example 21.

### [Example 25]

The thermal diffusivity of the composite of an alumina fiber sheet and a polyurethane resin obtained in Example 11 was measured. The calculation from the thermal diffusivity to the thermal conductivity was performed by calculating the specific gravity and specific heat of the composite from each content using the specific gravity of alumina of 3,890 kg/m³, the specific heat of alumina of 750 J/kg°C, the specific gravity of polyurethane resin of 1,200 kg/m³, and the specific heat of polyurethane resin of 1,900 J/kg°C.

### [Example 26]

The thermal diffusivity of the composite of an alumina fiber sheet and a polyurethane resin obtained in Example 12 was measured in the same manner as in Example 25.

### [Example 27]

The thermal diffusivity of the composite of an alumina fiber sheet and a polyurethane resin obtained in Example 13 was measured in the same manner as in Example 25.

### [Example 28]

The thermal diffusivity of the composite of an alumina fiber sheet and an epoxy resin obtained in Example 14 was measured. The calculation from the thermal diffusivity to the thermal conductivity was performed by calculating the specific gravity and specific heat of the composite from each content using the specific gravity of alumina of 3,890 kg/m³, the specific heat of alumina of 750 J/kg°C, the specific gravity of epoxy resin of 1,400 kg/m³, and the specific heat of epoxy resin of 1,400 J/kg°C.

### [Example 29]

The thermal diffusivity of the composite of an alumina fiber sheet and an epoxy resin obtained in Example 15 was measured in the same manner as in Example 28.

### [Example 30]

The thermal diffusivity of the composite of an alumina fiber sheet and an epoxy resin obtained in Example 16 was measured in the same manner as in Example 28.

### [Example 31]

The thermal diffusivity of the composite of an alumina fiber sheet and an epoxy resin obtained in Example 17 was measured in the same manner as in Example 28.

### [Example 32]

The thermal diffusivity of the composite of an alumina fiber and an epoxy resin obtained in Example 18 was measured in the same manner as in Example 28.

### [Example 33]

The thermal diffusivity of the composite of an alumina fiber sheet and a polyimide resin obtained in Example 19 was measured. The calculation from the thermal diffusivity to the thermal conductivity was performed by calculating the specific gravity and specific heat of the composite from each content using the specific gravity of alumina of 3,890 kg/m³, the specific heat of alumina of 750 J/kg°C, the specific gravity of polyimide resin of 1,420 g/m³, and the specific heat of polyimide resin of 1,100 J/kg°C.

### [Example 34]

The thermal diffusivity of the composite of an alumina fiber sheet and a silicone resin obtained in Example 20 was measured. The calculation from the thermal diffusivity to the thermal conductivity was performed by calculating the specific gravity and specific heat of the composite from each content using the specific gravity of alumina of 3,890 kg/m³, the specific heat of alumina of 750 J/kg°C, the specific gravity of silicone resin of 2,100 g/m³, and the specific heat of silicone resin of 1,200 J/kg°C.

### [Comparative Example 5]

The thermal diffusivity of the composite of an alumina fiber sheet and polyvinyl alcohol obtained in Comparative Example 1 was measured in the same manner as in Example 21.

### [Comparative Example 6]

The thermal diffusivity of the epoxy resin sheet obtained in Comparative Example 2 was measured. For the calculation from the thermal diffusivity to the thermal conductivity, the specific gravity of epoxy resin of 1,400 kg/m³ and the specific heat of epoxy resin of 1,400 J/kg°C were used.

### [Comparative Example 7]

The thermal diffusivity of the composite of an alumina fiber sheet and an epoxy resin obtained in Comparative Example 3 was measured in the same manner as in Example 28.

### [Comparative Example 8]

The thermal diffusivity of the composite of an alumina fiber sheet and an epoxy resin obtained in Comparative Example 4 was measured in the same manner as in Example 28.

The thermal conductivity (average value for four places) in the direction parallel to the fiber, the thermal conductivity (average value for four places) in the direction perpendicular to the fiber, the thermal conductivity (average value for eight places) in the sheet thickness direction, and the ratio of the thermal conductivity in the direction parallel to the fiber to the thermal conductivity in the direction perpendicular to the fiber are presented in Tables 1, 2 and 3.

**[Table 1]**

| | | Example | | | | | | |
|---|---|---|---|---|---|---|---|---|
| | | 21 | 22 | 23 | 24 | 25 | 26 | 27 |
| Thickness of thermally conductive sheet (µm) | | 101 | 78 | 41 | 69 | 60 | 97 | 82 |
| Content of alumina fiber (% by weight) | | 49.5 | 40.0 | 71.5 | 32.0 | 30.8 | 61.2 | 84.7 |
| Thermal conductivity (W/mK) | Direction parallel to fiber | 16.3 | 10.0 | 21.8 | 8.2 | 8.3 | 19.7 | 25.3 |
| | Direction perpendicular to fiber | 7.1 | 5.3 | 9.3 | 5.7 | 4.2 | 6.6 | 13.2 |
| | Sheet thickness direction | 1.5 | 0.9 | 0.5 | 1.4 | 0.7 | 0.7 | 3.2 |
| | Ratio of parallel direction/ orthogonal direction | 2.3 | 1.9 | 2.3 | 1.4 | 2.0 | 3.0 | 1.9 |

**[Table 2]**

| | | Example | | | | | | |
|---|---|---|---|---|---|---|---|---|
| | | 28 | 29 | 30 | 31 | 32 | 33 | 34 |
| Thickness of thermally conductive sheet (µm) | | 52 | 51 | 117 | 150 | 113 | 80 | 46 |
| Content of alumina fiber (% by weight) | | 38.5 | 74.2 | 55.4 | 67.0 | 85.3 | 21.1 | 33.1 |
| Thermal conductivity (W/mK) | Direction parallel to fiber | 7.9 | 21.5 | 10.6 | 9.4 | 12.5 | 6.7 | 8.4 |
| | Direction perpendicular to fiber | 4.8 | 12.5 | 5.0 | 2.8 | 6.3 | 2.7 | 5.1 |
| | Sheet thickness direction | 0.4 | 0.9 | 0.5 | 0.2 | 0.7 | 0.9 | 0.4 |
| | Ratio of parallel direction/ orthogonal direction | 1.7 | 1.7 | 2.1 | 3.4 | 2.0 | 2.5 | 1.6 |

**[Table 3]**

| | | Comparative Example | | | |
|---|---|---|---|---|---|
| | | 5 | 6 | 7 | 8 |
| Thickness of thermally conductive sheet (µm) | | 207 | 102 | 151 | 109 |
| Content of alumina fiber (% by weight) | | 8.3 | 0.0 | 10.3 | 12.0 |
| Thermal conductivity (W/mK) | Direction parallel to fiber | 2.5 | 0.9 | 1.9 | 2.7 |
| | Direction perpendicular to fiber | 1.0 | 1.2 | 2.0 | 1.4 |
| | Sheet thickness direction | 0.7 | 0.2 | 0.4 | 0.6 |
| | Ratio of parallel direction/orthogonal direction | 2.5 | 0.7 | 0.9 | 2.0 |

It has been found that the thermal conductivities in the parallel direction along the alumina fiber measured in Examples 21 to 34 are from 6.7 to 25.3 W/mK to be high. The thermal conductivity in the parallel direction along the alumina fiber is 1.4 times or more the thermal conductivities in the direction orthogonal to the alumina fiber and in the sheet thickness direction, and anisotropy in thermal conductivity is thus exhibited. On the other hand, the thermal conductivities measured in Comparative Examples 5 to 8 were 3 W/mK or less in all the directions to be low.

### REFERENCE SIGNS LIST

- 1: voltage supply apparatus
- 2: metal nozzle
- 3: drum type collector
- 4: spinning distance

## Claims

1. A material having high thermal conductivity, the material comprising an alumina fiber sheet and a resin, wherein the alumina fiber sheet is contained in the material having high thermal conductivity at 20% to 90% by weight.

2. The material having high thermal conductivity according to claim 1, wherein the alumina fiber sheet is contained in the material having high thermal conductivity at 30% to 80% by weight.

3. The material having high thermal conductivity according to claim 1 or 2, wherein the alumina fiber is oriented in a certain direction.

4. The material having high thermal conductivity according to any one of claims 1 to 3, wherein the alumina fiber contains α-alumina.

5. The material having high thermal conductivity according to claim 4, wherein the α-alumina is contained in the alumina fiber at 50% by weight or more.

6. The material having high thermal conductivity according to any one of claims 1 to 5, wherein an average fiber diameter of the alumina fibers is 50 to 2,000 nm.

7. The material having high thermal conductivity according to claim 6, wherein an average fiber diameter of the alumina fibers is 100 to 1,000 nm.

8. The material having high thermal conductivity according to any one of claims 1 to 7, wherein the resin is at least one kind selected from the group consisting of polyvinyl alcohol, a polyurethane resin, an epoxy resin, a polyimide resin, and a silicone resin.

9. The material having high thermal conductivity according to any one of claims 1 to 8, wherein a thermal conductivity of the material having high thermal conductivity is 5 W/mK or more.

10. The material having high thermal conductivity according to any one of claims 1 to 9, wherein a thermal conductivity of the material having high thermal conductivity is anisotropic and a ratio of a thermal conductivity in a direction parallel to an alumina fiber to a thermal conductivity in a direction orthogonal to the alumina fiber is 1.4 or more.

11. The material having high thermal conductivity according to any one of claims 1 to 10, wherein the material having high thermal conductivity is electrically insulating.

12. A material having high thermal conductivity, the material comprising an alumina fiber sheet and a resin, wherein
(1) a thermal conductivity of the material having high thermal conductivity is 5 W/mK or more,
(2) the alumina fiber is oriented in a certain direction, and
(3) a thermal conductivity of the material having high thermal conductivity is anisotropic and a ratio of a thermal conductivity in a direction parallel to an alumina fiber to a thermal conductivity in a direction orthogonal to the alumina fiber is 1.4 or more.

13. The material having high thermal conductivity according to claim 12, wherein the material having high thermal conductivity is electrically insulating.

14. A method for producing a material having high thermal conductivity, the method comprising the steps of:
(1) fabricating a fiber sheet containing an alumina source using a dispersion containing the alumina source and a water-soluble polymer as a spinning material by an electrostatic spinning method or a dry spinning method;
(2) firing the fiber sheet containing an alumina source and fabricating an alumina fiber sheet; and
(3) impregnating the alumina fiber sheet with a resin solution having a resin concentration of 10% by weight or less.

15. The method for producing a material having high thermal conductivity according to claim 14, wherein the alumina fiber is contained in the material having high thermal conductivity at 20% by weight or more.

16. The method for producing a material having high thermal conductivity according to claim 15, wherein the alumina fiber is contained in the material having high thermal conductivity at 30% by weight or more.

17. The method for producing a material having high thermal conductivity according to any one of claims 14 to 16, wherein the alumina fiber is oriented in a certain direction.

18. The method for producing a material having high thermal conductivity according to any one of claims 14 to 17, wherein the alumina source is at least one kind selected from the group consisting of alumina hydrate, aluminum nitrate, aluminum sulfate, aluminum acetate, aluminum chloride, aluminum hydroxide, and alumina.

19. The method for producing a material having high thermal conductivity according to any one of claims 14 to 18, wherein a concentration of the alumina source in the dispersion is 1% to 40% by weight.

20. The method for producing a material having high thermal conductivity according to any one of claims 14 to 19, wherein the water-soluble polymer is at least one kind selected from the group consisting of polyvinyl alcohol, cellulose, a cellulose derivative, polyethylene glycol, polypropylene glycol, polyvinylpyrrolidone, poly(meth)acrylic acid, a poly(meth)acrylate, and polyvinyl acetate.

21. The method for producing a material having high thermal conductivity according to any one of claims 14 to 20, wherein a concentration of the water-soluble polymer in the dispersion is 5% to 40% by weight.

22. The method for producing a material having high thermal conductivity according to any one of claims 14 to 21, wherein the resin is at least one kind selected from the group consisting of polyvinyl alcohol, a polyurethane resin, an epoxy resin, a polyimide resin, and a silicone resin.

23. The method for producing a material having high thermal conductivity according to any one of claims 14 to 22, wherein the firing temperature is 500°C or higher.

24. The method for producing a material having high thermal conductivity according to claim 23, wherein the firing temperature is 1,200°C or higher.

25. The method for producing a material having high thermal conductivity according to any one of claims 14 to 24, wherein the alumina fiber contains α-alumina.

26. The method for producing a material having high thermal conductivity according to any one of claims 14 to 25, wherein a crystallization rate of the alumina fiber into α-crystal is 50% by weight or more.

27. The method for producing a material having high thermal conductivity according to any one of claims 14 to 26, wherein an average fiber diameter of the alumina fibers is 50 to 2,000 nm.

28. The method for producing a material having high thermal conductivity according to claim 27, wherein an average fiber diameter of the alumina fibers is 100 to 1,000 nm.

29. The method for producing a material having high thermal conductivity according to any one of claims 14 to 28, wherein a thermal conductivity of the material having high thermal conductivity is 5 W/mK or more.

30. The method for producing a material having high thermal conductivity according to any one of claims 14 to 29, wherein a thermal conductivity of the material having high thermal conductivity is anisotropic and a ratio of a thermal conductivity in a direction parallel to an alumina fiber to a thermal conductivity in a direction orthogonal to the alumina fiber is 1.4 or more.
